Europäisches Patentamt

(19) European Patent Office

Office européen des brevets

(11) Numéro de publication: **0 241 342**
**B1**

(12) **FASCICULE DE BREVET EUROPEEN**

(45) Date de publication du fascicule du brevet: **25.04.90**

(21) Numéro de dépôt: **87400633.1**

(22) Date de dépôt: **20.03.87**

(51) Int. Cl.⁵: **G 07 F 17/42,** G 07 B 3/04

(54) **Distributeur-programmateur automatique de cartes à micro-circuit.**

(30) Priorité: **25.03.86 FR 8604292**

(43) Date de publication de la demande:
**14.10.87 Bulletin 87/42**

(45) Mention de la délivrance du brevet:
**25.04.90 Bulletin 90/17**

(84) Etats contractants désignés:
**AT BE CH DE ES GB GR IT LI LU NL SE**

(56) Documents cités:
**DE-A-2 551 918**
**DE-A-3 432 557**
**FR-A-1 540 050**
**FR-A-2 533 048**
**FR-A-2 551 918**
**GB-A-1 277 844**

(73) Titulaire: **ELECTRONIQUE SERGE DASSAULT**
**55, quai Marcel Dassault**
**F-92214 Saint-Cloud (FR)**

(72) Inventeur: **Gaucher, Michel**
**6, avenue des Platanes**
**F-78320 Le Mesnil-Saint-Denis (FR)**

(74) Mandataire: **Plaçais, Jean-Yves et al**
**Cabinet Netter, 40, rue Vignon**
**F-75009 Paris (FR)**

Courier Press, Leamington Spa, England.

## Description

L'invention concerne la distribution des cartes à microcircuits, dont, l'usage doit maintenant se généraliser.

Ainsi, pour les téléphones publics, on vend maintenant des cartes à micro-circuits, dites "Télécartes", et valant par exemple 40 ou 120 unités téléphoniques. L'avantage recherché est clair: ne contenant plus d'argent, les téléphones public ne seront plus sujets à des effractions.

En contre partie, il faut amortir le coût de base de la carte à micro-circuits, et les frais de diffusion des Télécartes. En effet, la diffusion est assurée non seulement par les services officiels du téléphone, mai aussi, et surtout, par les commerçants, auxquels il convient de rémunérer ce service.

La Demande de Brevet DE—A—3432557 décrit un distributeur automatique de cartes à micro-circuits, capable notamment de délivrer des "télécartes". Ces appareils réduisent le coût de la diffusion des télécartes. Ils font cependant renaître le problème de sécurité: c'est l'effraction des distributeurs de télécartes qu'il faut maintenant éviter. Il est envisageable, pour cela, de placer ces distributeurs en des lieux très fréquentés, ou surveillés, ce qui minimise le risque d'effractions. Mais cette solution n'est pas applicable d'une manière générale.

La Demanderesse s'est posé le problème d'améliorer encore la sécurité des distributeurs de cartes à microcircuits.

Ainsi, l'invention a notamment pour but de fournir un distributeur automatique de cartes à micro-circuits dont le stock de cartes ne présente pas une valeur monétaire.

Un autre but de l'invention est de permettre la re-validation (ou re-programmation) d'une carte à micro-circuits dont le crédit est épuisé.

A cet effet, l'invention propose un distributeur automatique de cartes à micro-circuits, qui comprend, dans une armoire:

— des moyens de commande et de dialogue avec l'usager, permettant de vérifier son droit à disposer d'une carte,

— au moins un magasin de cartes à micro-circuits non valides,

— des moyens de préhension propres à faire sortir une carte à la fois du magasin,

— un premier convoyeur pour amener la carte en coopération avec une unité de programmation capable de la valider, et

— un second convoyeur propre à conduire la carte validée jusqu'à une fente de délivrance traversant la paroi de l'armoire.

En pratique, l'unité de traitement est également capable de contrôler la validation de la carte, et le distributeur comprend des moyens d'éjection permettant de stocker, à l'intérieur de l'armoire, toute carte incorrectement validée.

De préférence, le premier et le second convoyeur possèdent une partie commune, propre au transfert de la carte dans l'unité de programmation, et inversement.

Selon un autre aspect de l'invention, l'unité de programmation mobile, possède une seconde position, dans laquelle elle ne coopère plus avec le premier convoyeur ou la partie commune. L'éjection peut alors se faire directement du convoyeur dans un réceptacle de cartes non valides.

Dans un mode de réalisation particulier de l'invention, les moyens de préhension comprennent un rouleau porté par un levier mobile, et propre à coopérer sur commande avec le magasin pour en faire sortir une carte vers le premier convoyeur.

Avantageusement, le premier convoyeur comprend au moins deux paires de galets, constituant ladite partie commune, l'un au moins de ces galets, étant motorisé. Une courroie en circuit fermé peut alors passer entre les galets de chacune de ces deux paires. De son côté, le second convoyeur comprend, en propre, au moins deux autres paires de galets, dont la dernière est placée près de la fente de sortie. La courroie passe également dans ces autres paires de galets.

Il est intéressant que, dans la paire intermédiaire de galets propre au second convoyeur, l'un des galets joue aussi le rôle du galet de préhension.

Selon encore un autre aspect de l'invention, la sortie de carte du magasin, le trajet dans le premier convoyeur et l'entrée/sortie de carte dans l'unité de programmation sont sensiblement alignés.

De ce fait, le trajet défini par les deux paires de galets propres au second convoyeur est en principe incliné sur le trajet dans le premier convoyeur. Selon l'invention, l'un des galets situé au droit de la transition est rendu mobile, pour permettre le basculement de la carte sans perte de la continuité d'entraînement.

Dans un mode de réalisation, le magasin à cartes comprend au moins un boîtier logeant des cartes empilées, sollicitées par rappel élastique vers une position de préhension et de sortie.

Plusieurs boîtiers de ce genre peuvent être montés sur un carrousel.

Dans une variante de réalisation, le magasin comprend un carrousel alvéolé propre à loger une carte par alvéole, mobile à rotation à l'intérieur d'un boîtier discoïde fermé, sauf au droit d'un emplacement d'alvéole, et logeant également les moyens d'entraînement du carrousel.

D'autres caractéristiques et avantages de l'invention apparaîtront à l'examen de la description détaillée ci-après, et des dessins annexés, sur lesquels:

— la figure 1 est une vue schématique en perspective d'une unité de programmation utilisable dans le dispositif selon l'invention;

— la figure 2 est une vue schématique latérale du dispositif selon l'invention;

— les figures 2A à 2C sont des schémas permettant de mieux comprendre le fonctionnement de l'unité de programmation au sein du dispositif de la figure 2;

— la figure 3 est un schéma en vue de dessus montrant un premier mode de réalisation d'un carrousel formant magasin à cartes;

— la figure 4 est un schéma de principe montrant la structure générale, du point de vue électronique et fonctionnel, d'un dispositif; et

— les figures 5 et 5A sont des schémas montrant une variante de réalisation du magasin.

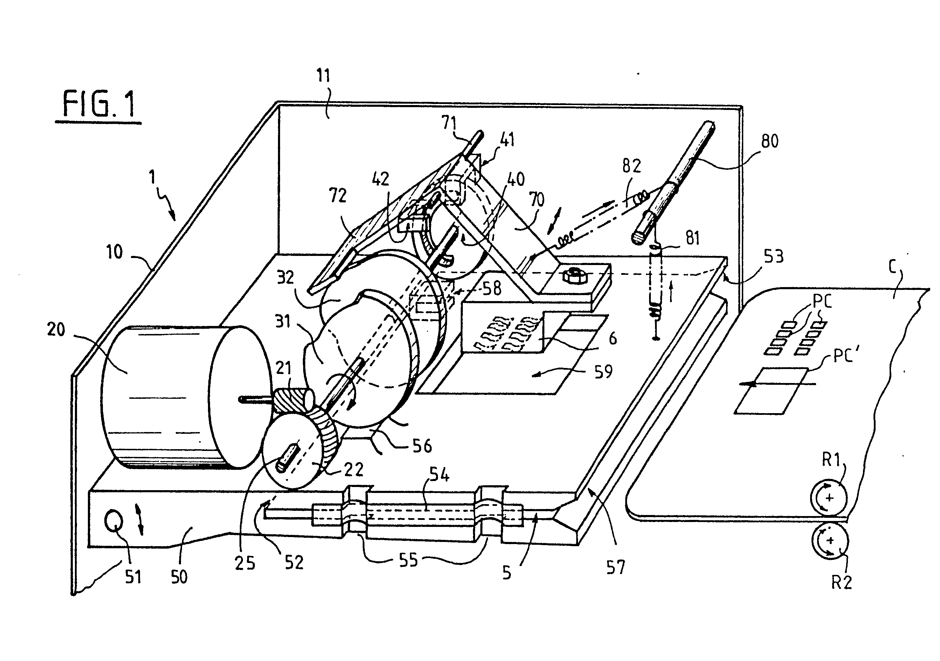

On décrira tout d'abord l'unité de programmation, en référence à la figure 1. Cette unité de programmation a fait l'objet de la Demande de Brevet EP—A—235022. Le contenu descriptif de cette Demande de Brevet est, si besoin est, incorporé à la présente description.

En bref, l'unité de programmation de la figure 1 comporte un châssis 1 dont on voit ici la paroi de fond 10 et la paroi latérale 11.

Un moteur à courant continu 20 entraîne une vis sans fin 21 qui coopère avec une roue dentée 22 pour faire tourner dans le sens des aiguilles d'une montre un arbre 25, portant deux cames 31 et 32 ainsi qu'une roue 40 formant codeur angulaire à deux positions.

Un réceptacle 5 pour cartes à micro-circuits est défini par un alvéole ménagé dans un plateau 50, mobile à pivotement autour d'un axe 51.

La came 31 est palpée par un bossage supérieur 56 du plateau 50; le contact est assuré par le rappel élastique d'un ressort 81 monté entre le dessus du plateau 50 et la tige 80.

L'alvéole qui va servir à la réception d'une carte telle que C comporte un bord de référence 53 et, à l'opposé, une lame 54 qui rappelle élastiquement la carte C vers le bord 53. Un détecteur 58 vérifie le bon positionnement de la carte dans l'alvéole 5.

La paroi supérieure du plateau 50 est percée d'un alvéole 59 qui permet le passage d'un bloc connecteur 6. Celui-ci est porté par un levier 70 articulé sur un axe 71 et complété à l'opposé d'une partie en forme de L dont l'extrémité vient palper la came 32, compte tenu du rappel élastique qu'exerce sur le ressort 82 le levier 70.

Il sera fait référence ci-après à cette unité de programmation 1, mais dans une version retournée, ce qui suppose une symétrie par rapport à son plan médian vertical.

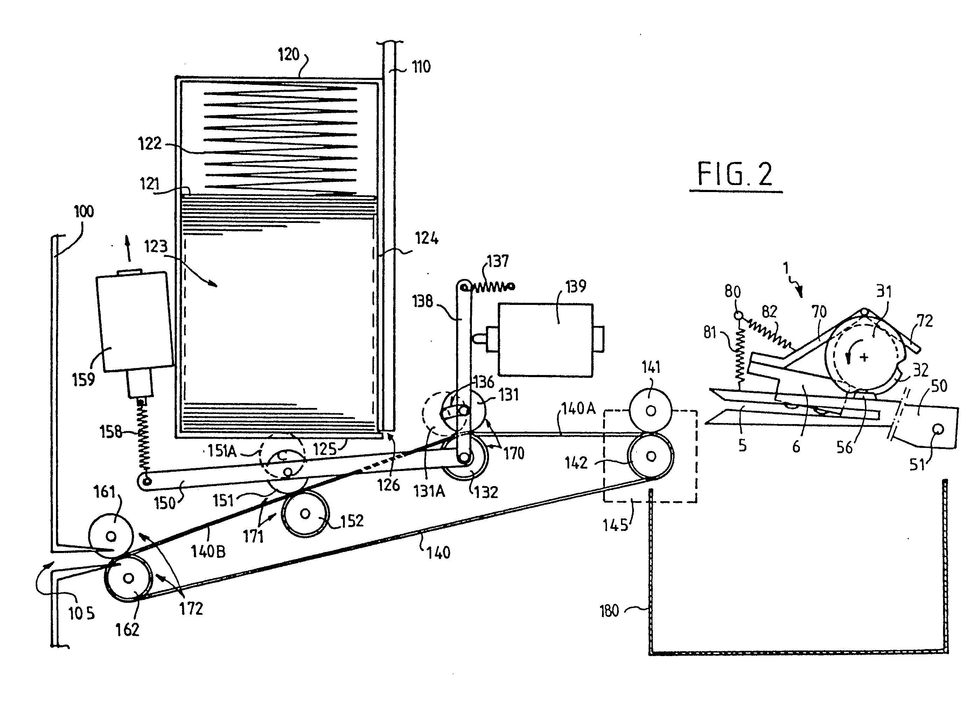

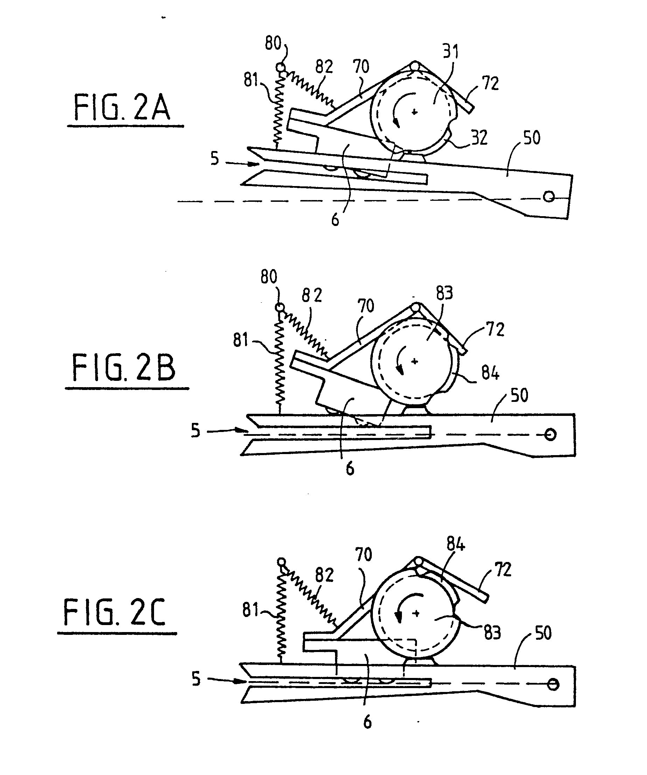

Sur la figure 2, le distributeur selon l'invention comprend une armoire dont on voit en partie la paroi extérieure renforcée 100, et la fente 105 pour la délivrance d'une carte à l'usager.

Un disque vertical 110 supporte une série de boîtiers de cartes 120. Chaque boîtier 120 contient intérieurement des moyens de rappel élastique 122 qui sollicitent un piston 21, lequel pousse une pile de cartes 123 vers le bas. La dernière carte est en appui sur la paroi de fond 125, et peut sortir par l'orifice 126.

La paroi de fond 125 est percée pour permettre le passage d'un galet 151, lorsque celui-ci est amené dans sa position 151A. Cela est obtenu sous l'effet d'un électro-aimant 159, dont la tige 158, munie d'un rappel élastique, sollicite le levier 150 porteur du galet 151.

Des moyens moteurs, non représentés, font tourner le galet 151 dans le sens des aiguilles d'une montre lorsqu'il est dans sa position 151A (courroie entre 132 et 151, par exemple).

Une carte est alors extraite du boîtier 120, et la technique des dépileurs permet de s'assurer qu'on ne sort qu'une carte à la fois, par exemple en utilisant une goulotte convenable.

La carte sort alors dans l'axe de deux paires de galets 131 et 132 d'une part, 141 et 142 d'autre part. Ces deux paires de galets forment un premier convoyeur (trajet 140A), qui permet de transporter la carte jusqu'à l'unité de programmation 1, et de l'en retirer.

Un second convoyeur est formé par les deux paires de galets déjà mentionnées, ainsi que par une troisième paire de galets 161 et 162, située près de la fente de délivrance 105, et en coopération avec celle-ci pour permettre la sortie de la carte. Une quatrième paire de galets, intermédiaire, est définie par le galet 151 déjà mentionné, dans sa position de repos, et un galet 152. Une courroie 140 s'enroule en circuit fermé sur les galets 162, 152, 132 et 142. En d'autres termes, cette courroie passe entre les deux galets de chaque paire. Le galet 142, motorisé, assure, avec la courroie 140, le mouvement des deux convoyeurs.

Un détecteur be bord de carte 170, tel qu'une barrière photoélectrique, est placé juste à droite de la paire de galets 131 et 132, c'est-à-dire vers l'aval, pour le trajet aller de la carte vers l'unité 1. Deux autres barrières photoélectriques 171 et 172 sont respectivement placées juste à gauche de la paire de galets 151 et 152 et de la paire de galets 161 et 162 (toujours vers l'aval, lors du trajet aller de la carte dans le second convoyeur, entre l'unité de programmation 1 et la fente de délivrance 105).

Par ailleurs, le galet 131 fait l'objet d'un montage spécial. Il est monté au bas d'une tige 138, munie d'un rappel élastique 137 dans la position verticale. Cette tige 138 peut être sollicitée par un poussoir à électro-aimant 139, qui permet son déplacement vers la gauche, de sorte que le galet 131 subit un trajet suivant un arc de cercle 136, où il est guidé par son axe. Il vient alors dans la position 131A, où le point de tangence entre le galet 131A et le galet 132 est aligné sur les tangentes communes aux paires de galets 151 et 152 ainsi que 161 et 162.

Un bac 180 est monté sous l'unité de programmation 1, presque jusqu'à son axe 51. De l'autre côté, il s'étend pratiquement jusqu'à la verticale des galets 141 et 142.

Sur la figure 2, l'unité de programmation 1 est illustrée dans sa position de repos, où elle ne coopère pas avec la paire de galets 141 et 142 (qui correspond aux galets R1 et R2 de la figure 1).

Cette position de repos est rappelée sur la figure 2A. Comme décrit dans la Demande de Brevet EP A 235022 déjà citée, l'unité 1 peut, sur commande, prendre d'abord la position 2B, où elle va recevoir une carte pratiquement sans frottement, puis la position 2C, où elle fait venir un connecteur multiple 6 en contact avec les plots de connexion PC de la carte à micro-circuits.

Le fonctionnement général du dispositif est alors le suivant:

— Commé déjà mentionné, une carte est d'abord extraite du boîtier 120. Elle entre dans le premier convoyeur, et l'unité 1 est placée dans la position de la figure 2B pour recevoir cette carte.

— L'unité de programmation 1 passe alors dans la situation de connexion de la figure 2C. La carte est validée ou programmée, puis, de préférence, vérifiée, après quoi l'unité 1 passe à nouveau dans la position de la figure 2B, et la carte est retirée. L'unité de programmation 1 retourne alors dans sa position de repos de la figure 2A.

— Si la vérification montrait que la carte est incorrectement validée, pour quelque raison que ce soit, le premier convoyeur serait à nouveau animé d'un mouvement vers la droite, et la carte tomberait directement dans le bac 180. Les opérations précédentes seraient réitérées avec une nouvelle carte extraite du magasin 120, le cas échéant.

— La carte étant correctement validée, elle avance un peu dans le premier convoyeur. En réponse à une détection de bord (avant par exemple) de carte par les capteurs 170, l'électro-aimant 139 est actionné pour faire basculer le galet 131 dans sa positon 131A. La carte prend alors la direction propre au second convoyeur, dans la partie 140B de la courroie. Bien entendu, l'électro-aimant 159 aura été entre temps relâché pour ramener le galet porté par le bras 150 dans sa position 151. On notera au passage que le levier 150 est avantageusement articulé coaxialement au galet 132.

— La carte peut alors descendre le long de la portion de courroie 140B, pour faire saillie par la fente 105, où l'usager peut la prendre. La condition de présentation de la carte à l'usager est détectée par la barrière photo-électrique 171. La barriére photoélectrique 172 détecte que la carte a été bien prise par l'usager au bout d'un temps prédéterminé. L'usager est de préférence rappelé par un signal sonore (ou autre), en cas d'oubli.

— A défaut, l'ensemble du second convoyeur (trajets 140B et 140A) est actionné en sens inverse, et la carte est mise sous séquestré dans le bac 180.

Le distributeur selon l'invention permet d'améliorer la sécurité à plusieurs titres: d'une part, au niveau du magasin de cartes lui-même, d'autre part, au niveau de la programmation des cartes.

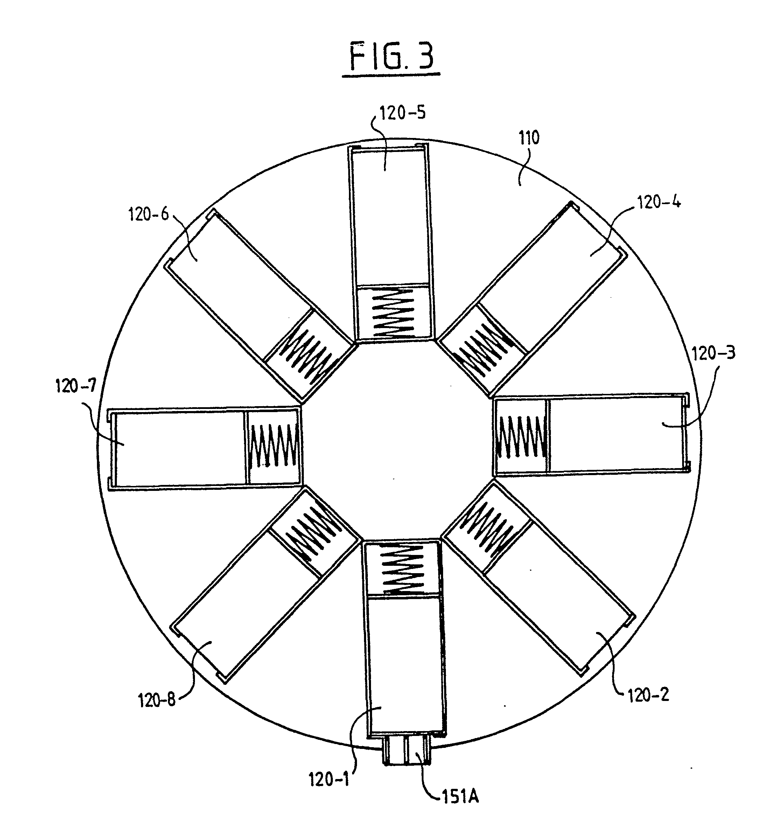

En ce qui concerne le magasin lui-même, celui-ci peut revêtir, dans un premier mode de réalisation, la forme illustrée sur la figure 3. Sur le disque 110 sont implantés par exemple huit boîtiers 120—1 à 120—8. On note que le boîtier 120—1 est celui en prise avec le rouleau 151 dans sa position 151A.

A la production des cartes, celles-ci sont tout d'abord mises dans les boîtiers 120. Isolément, le boîtier 120 est fermé, et on ne peut pas extraire les cartes. C'est le fait de mettre ce boîtier sur un plateau tel que 110 qui, par un système d'indexation et/ou de codage mécanique par exemple (3 micro-interrupteurs ou 3 capteurs opto-électroniques, judicieusement implantés), va permettre de déverrouiller un levier qui, à son tour, autorise l'extraction des cartes, une à la fois. En dehors de la situation où les boîtiers sont implantés sur un disque 110 dans un distributeur, il n'est donc pas possible d'extraire les cartes autrement qu'en brisant le boîtier qui les contient.

A l'intérieur même du distributeur, il n'est pas possible de faire circuler plusieurs cartes en même temps: l'organe 151 qui extrait les cartes ne vient dans la position d'extraction 151A qu'une seule fois, sous le contrôle d'une unité centrale, come on le verra ci-après, au cours de chaque cycle de fonctionnement de la machine.

Bien entendu, le positionnement correct du boîtier 120—1 face au galet de préhension 151 est assuré par une roue codeuse ou un système équivalent d'indexation mécanique, prévu sur le disque 110.

On s'intéressera maintenant à la programmation de la carte.

Suivant les applications, et le type de carte concerné, la validation d'une carte peut consister en une programmation complète d'une carte entièrement vierge. A l'opposé, il peut s'agir d'une carte presque entièrement validée, mais à laquelle il manque encore un bit de validation, en un point bien déterminé. Bien entendu, toutes les situations intermédiaires sont envisageables.

Par exemple, dans le cas de l'application télécarte, on peut concevoir que des télécartes de 40 et 120 unités soient placée dans différents conteneurs 120—1 et 120—2, sur le carrousel 110 de la figure 3. Ces cartes peuvent alors porter à l'avance des inscriptions définissant leur montant en termes d'unités teléphoniques.

Si au contraire, les cartes sont entièrement vierges, on peut prévoir, à l'intérieur de la partie 140B du second convoyeur, un marquage de ces cartes pour indiquer le nombre d'unités téléphoniques auxquelles elles donnent droit. Si le nombre de possibilitès est restreint, ce marquage peut s'effectuer par tampon encré commandé par des électro-aimants. Dans le cas où le nombre de possibilités est plus varié, on peut utiliser une technique d'impression comme celle décrite dans la Demande de Brevet français N° 83 11444, publiée sous le N° 2 548 804, dans la Demande de Brevet N° 84 10380, publiée sous le N° 2 566 705, ou encore comme celle décrite dans la Demande de Brevet N° 85 01661 par exemple.

Le distributeur présente un autre avantage essentiel: quel que soit le mode de validation ou de programmation de la carte à micro-circuits, il est possible de prévoir que, une fois le crédit épuisé, la carte peut être réintroduite par l'usager, et re-validée ou re-programée par la machine, après paiement par l'usager d'une somme convenable.

Il suffit pour cela que l'usager présente sa carte en 105, et qu'elle soit introduite dans la machine jusqu'à atteindre sa position dans le premier convoyeur 140A (après basculement inverse du galet 141).

Le droit qu'a l'usager à disposer d'une carte est alors vérifié, puis la carte est re-validtée ou reprogrammée Si cette revalidation est infructueuse, ou impossible (le nombre de validations peut être limité par programmation interne de la carte, dès l'origine) une nouvelle carte est alors programmée et distribuée à l'usager.

Il a été fait référence ci-dessus au "droit de l'usager a disposer d'une carte". En practique ce droit se manifestera par le paiement d'une somme, en pièces de monnaie, billets ou par tout moyen de paiement électronique. Mais il est envisageable également que l'usager puisse tirer son droit à une carte d'une autre manière que par un paiement.

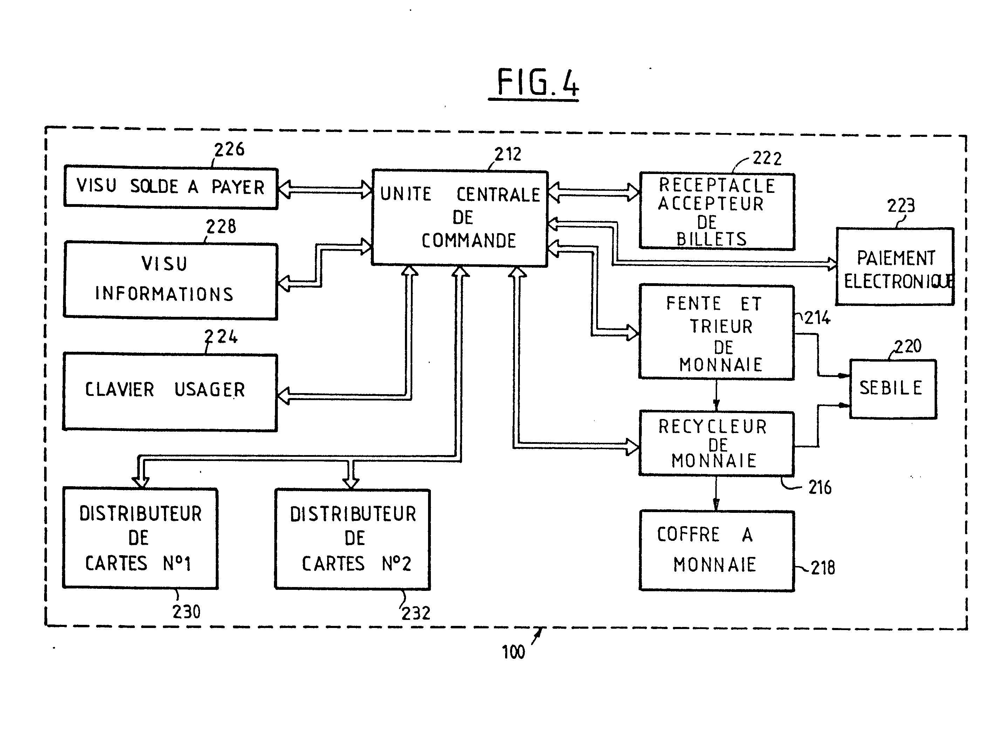

On admettra maintenant que le droit à la carte doit être payé. La structure générale, fonctionnelle, de l'appareil est illustrée sur la figure 4. Des organes 214 à 218, complétés d'une sébile 220, permettent un paiement en monnaie. Un paiement en billets est permis par un réceptacle 222.

De préférence, on pourra procéder à un paiement électronique par les moyens bien connus, illustrés en 223 (carte bancaire à micro-circuits, carte accréditive, notamment).

Tout cela se fait sous le contrôle d'une unité centrale de commande 212, qui reçoit des indications d'un clavier d'usager 224, et actionne en conséquence des organes de visualisation 226 et 228 portant par exemple sur le solde à payer et sur d'autres informations.

L'unité centrale 212 commande, aprés avoir vérifié le droit à la carte, l'actionnement d'un distributeur tel que 230 ou 232. Compte tenu du fait que le magasin selon l'invention peut contenir un grand nombre de cartes, il est estimé actuellement qu'un seul distributeur sera suffisant en pratique.

Les liaisons entre l'unité centrale 212 et le distributeur consisteront en:

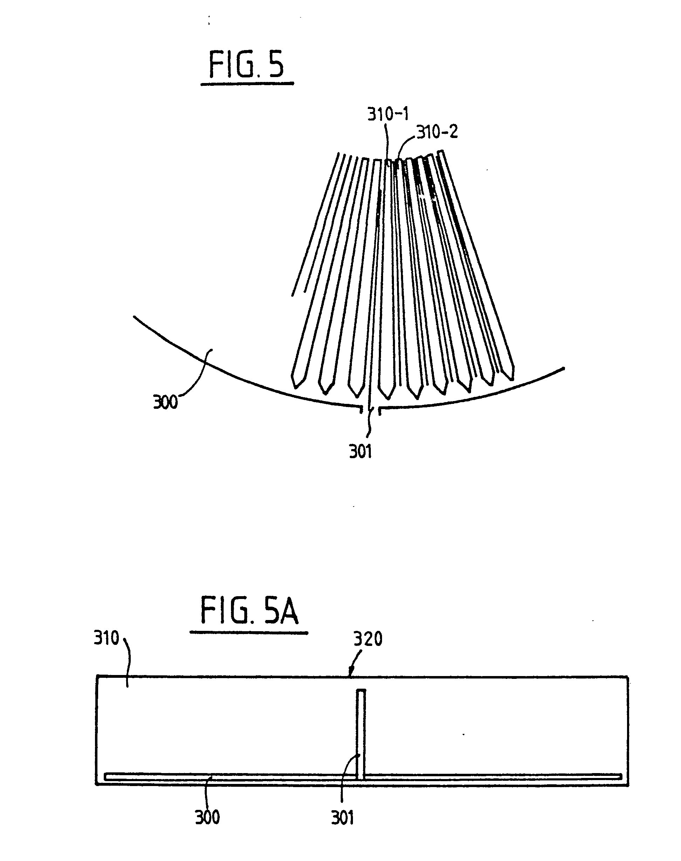

— commande du positionnement du carrousel 110 (figure 2) ou 300 (figure 5) décrite ci-après,

— actionnement de l'électro-aimant 159 et du moteur pas à pas 145 pour l'extraction d'une carte, à moins que l'usager n'ait présenté dans la fente 105 une carte à re-valider,

— simultanément ou séquentiellement, mise en position de l'unité de programmation 1, mouvement inverse des convoyeurs, avec actionnement de l'électro-aimant 139, jusqu'à délivrer la nouvelle carte à l'usager, ce compte tenu des variantes décrites plus haut dans le cas d'une carte incorrectement validée, ou d'une carte à re-valider. En ce qui concerne l'unité de programmation elle-même, l'unité centrale 212 sera reliée au moteur 20, ainsi qu'aux détecteurs 41, 42 et 58, et bien entendu à l'ensemble des plots du bloc connecteur 6.

On décrira maintenant en référence aux figures 5 et 5A une variante du magasin selon l'invention.

La figure 5A est une vue latérale du magasin lui-même, constitué d'un boîtier discoïde rigide, de préférence fermé par des vis plombées, et logeant intérieurement un disque 300 et les moyens d'entraînement 320 coaxiaux à ce disque. Ces moyens 320 sont munis de leur électronique de commande à l'intérieur du boîtier 310, de façon qu'il ne soit pas possible de déplacer le disque 300 sans connaître le détail des moyens de commande, et le cas échéant des codes de sécurité associés à la commande.

La figure 5 est une vue de dessus du disque 300, boîtier 310 enlevé.

On voit que ce disque est porteur d'une pluralité d'alvéoles logeant chacun une carte dans les positions telles que 310—1, 310—2, et ainsi de suite.

La délivrance de la carte n'est possible que si son alvéole vient au droit de l'ouverture 301, ce qui permet à la carte de descendre verticalement.

La sécurité ainsi obtenue est pratiquement aussi bonne que dans le premier mode de réalisation, puisqu'il n'est pas possible de faire tourner le disque 300 à l'intérieure du boîtier 310 sans une connaissance profonde du système et de ses codes de sécurité à l'entraînement, ou bien sans fracturer le boitier 310.

La carte peut alors être reprise dans un mécanisme approprié, pour entrer dans le trajet 140A du premier convoyeur.

On peut aussi prévoir qu'elle descend, en position prédéterminée, dans une glissière ou toboggan, qui l'amène en prise entre les galets 131 et 132. L'ensemble des galets du dispositif peut alors être aligné.

Il est important d'éviter que le vol des moyens de programmation de la carte ne permette l'élaboration de cartes frauduleusement programmées. Pour cela, le matériel est avantageusement surveillé par une liaison téléphonique. Il reçoit alors, par cette liaison, une clef de chiffrement (clef DES — Data Encryption Standard — comme déjà utilisé pour les transactions entre banques, par exemple), qui seule permet la programmation valide des cartes. 'De plus, des mémoires vives sauvegardées peuvent être rendues automatiquement effaçables en cas d'effraction et/ou vol du dispositif.

Par ailleurs, le dispositif selon l'invention peut être complété par des moyens de lecture/écriture sur des pistes magnétiques de la carte, logés par exemple entre les galets 131 et 141.

Bien entendu, la présente invention n'est pas limitée aux modes de réalisation décrits, mais s'étend au contraire à toute variante incluse dans le cadre de le protection definie par les revendications ci-après.

**Revendications**

1. Distributeur automatique de cartes à micro-circuits, caractérisé en ce qu'il comprend, dans une armoire (100):

— des moyens de commande (210—224) et de dialogue avec l'usager, permettant de vérifier son droit à disposer d'une carte,

— au moins un magasin de cartes à micro-circuits non valides (230, 232),

— des moyens de prehension (150—159) propres à faire sortir une carte à la fois du magasin,

— un premier convoyeur (131, 132, 141, 142) pour amener la carte en coopération avec une unité de programmation (1) capable de la valider, et

— un second convoyeur (141, 142, 131, 132, 151, 152, 161, 162) propre à conduire la carte validée jusqu'à une fente de délivrance (105) traversant la paroi de l'armoire.

2. Distributeur selon la revendication 1, caractérisé en ce que l'unité de traitement (1) est également capable de contrôler la validation de la carte, et en ce qu'il comprend des moyens d'éjection (131, 132, 141, 142, 180) permettant de stocker, à l'intérieur de l'armoire, toute carte incorrectement validée.

3. Distributeur selon l'une des revendications 1 et 2, caractérisé en ce que les premier et second convoyeurs possèdent une partie commune (131, 132, 141, 142) propre au transfert de la carte dans l'unité de programmation, et inversement.

4. Distributeur selon la revendication 3, caractérisé en ce que l'unité de programmation mobile (1) possède une seconde position, dans laquelle elle ne coopère plus avec le premier convoyeur en la partie commune, l'éjection se faisant alors directement du convoyeur dans un réceptacle de cartes non valides (180).

5. Distributeur selon la revendication 3, caractérisé en ce que les moyens de préhension comprennent un rouleau (151) porté par un levier mobile (150), et propre à coopérer sur commande avec le magasin (120) pour en faire sortir une carte vers le premier convoyeur (131, 132).

6. Distributeur selon l'une des revendications 3 à 5, caractérisé en ce que le premier convoyeur comprend au moins deux paires de galets (131, 132, 141, 142), constituant ladite partie commune, l'un au moins de ces galets étant motorisé (142).

7. Distributeur selon l'une des revendications 3 à 6 caractérisé en ce que le second convoyeur comprend une courroie (140) passant en circuit fermé entre les galets (131, 132, 141, 142) du premier convoyeur, et entre les galets d'au moins deux autres paires (151, 152, 161, 162) dont la dernière (161, ,162) est placée près de la fente de sortie (105).

8. Distributeur selon la revendication 7, caractérisé en ce que, pour la paire intermèdiaire de galets (151, 152) propre au second convoyeur, l'un des galets (151) est aussi celui des moyens de préhension (150).

9. Distributeur selon l'une des revendications 3 à 8, caractérisé en ce que la sortie de carte du magasin (126), le trajet dans le premier convoyeur (131, 132, 141, 142) et l'entrée/sortie de carte (5) dans l'unité de programmation sont sensiblement alignés.

10. Distributeur selon la revendication 9, caractérisé en ce que le trajet défini par les deux paires de galets propres au second convoyeur (151, 152, 161, 162) est incliné sur le trajet dans le premier convoyeur, et en ce que l'un (131) des galets situé au droit de la transition est mobile (131A) pour permettre le basculement de la carte sans perte de la continuité d'entraînement.

11. Distributeur selon la revendication 10, caractérisé en ce que le centre dudit galet mobile (131) suit un arc de cercle (136) sensiblement concentrique à l'autre galet de la même paire.

12. Dispositif selon l'une des revendications 10 et 11, caractérisé en ce qu'il comporte un détecteur de bord de carte (170) voisin dudit galet mobile, côté premier convoyeur.

13. Dispositif selon l'une des revendications 3 à 12, caractérisé en ce qu'il comprend un détecteur de bord de carte (171) situé au voisinage du milieu de la partie propre au second convoyeur, et un détecteur de bord de carte (172) au niveau de la fente de délivrance.

14. Dispositif selon l'une des revendications précédentes, caractérise en ce que le magasin à cartes (110) comprend au moins un boîtier (120) logeant des cartes empilées, sollicitées par rappel élastique (122) vers une position de préhension pour leur sortie (126).

15. Dispositif selon la revendication 14, caractérisé en ce que plusieurs boîtiers (120—1 à 120—8) sont montés sur un carrousel (110).

16. Dispositif selon l'une des revendications 1 à 13, caractérisé en ce que le magasin comprend un carrousel alvéolé (300) propre à loger une carte par alvéole, mobile à rotation à l'intérieur d'un boîtier discoïde (310) fermé sauf au droit d'un emplacement d'alvéole (301) et logeant également les moyens d'entraînement du carrousel (320).

17. Dispositif selon l'une des revendications précédentes, caractérisé en ce qu'il est agencé pour permettre également la reprogrammation d'une carte déjà utilisée.

**Patentansprüche**

1. Automatische Ausgabe-Programmiervorrichtung für Chipkarten, dadurch gekennzeichnet, daß sie in einem Schrank (100) aufweist:
— Organe (210—224) zur Steuerung und zum Dialog mit dem Benützer zur Feststellung seines Rechtes, über eine Karte zu verfügen,
— mindestens ein Magazin (230, 232) für nicht gültige Chipkarten,
— Greiforgane (150—159) zum Ausbringen einer Karte des Magazins,
— einen ersten Förderer (131, 132, 141, 142) für die Zuführung der Karte zum Zusammenwirken mit einer die Gültigkeit der Karte herstellenden Programmiereinheit (1), und
— einen zweiten Förderer (141, 142, 131, 132, 151, 152, 161, 162) zum Führen der gültigen Karte bis zu einem die Wand des Schrankes querenden Ausgabefenster.

2. Vorrichtung nach Anspruch 1, dadurch gekennzeichnet, daß die Bearbeitungseinheit (1) gleichzeitig zur Kontrolle der Gültigkeit der Karte geeignet ist und daß sie Ausstoßorgane (131, 132, 141, 142, 180) aufweist, die im Inneren des Schrankes die Lagerung jeder unrichtig gültig gemachten Karte ermöglichen.

3. Ausgabevorrichtung nach Anspruch 1 oder 2, dadurch gekennzeichnet, daß die ersten und zweiten Förderer einen gemeinsamen Teil (131, 132, 141, 142) besitzen, der zur Überführung der Karte in die Programmiereinheit und umgekehrt geeignet ist.

4. Ausgabevorrichtung nach Anspruch 3, dadurch gekennzeichnet, daß die bewegliche Programiereinheit (1) eine zweite Stellung besitzt, in der sie mit dem gemeinsamen Teil des ersten Förderers nicht zusammenwirkt, wobei der Ausstoß dann direkt vom Förderer in einen Behälter (180) für nicht gültige Karten erfolgt.

5. Ausgabevorrichtung nach Anspruch 3, dadurch gekennzeichnet, daß die Greiforgane eine von einem beweglichen Hebel (150) getragene Rolle (151) aufweisen und zum Zusammenwirken mit dem Magazin 120 ausgebildet sind, um eine Karte gegen den ersten Förderer (131, 132) zu auszugeben.

6. Ausgabevorrichtung nach einem der Anspruche 3 bis 5, dadurch gekennzeichnet, daß der erste Förderer mindestens zwei Paare von Rollen (131, 132, 141, 142) aufweist, die den genannten gemeinsamen Teil bilden, wobei mindestens eine (142) dieser Rollen angetrieben ist.

7. Ausgabevorrichtung nach einem der Anspruche 3 bis 6 dadurch gekennzeichnet, daß der zweite Förderer einen Riemen (140) aufweist, der im geschlossenen Kreis über die Rollen (131, 132, 141, 142) des ersten Förderers und zwischen den Rollen mindestens zweier anderer Paare (151, 152, 161, 162) läuft, wobei das letzte (161, 162) dieser Paare nahe dem Ausgabefenster (105) angeordnet ist.

8. Ausgabevorrichtung nach Anspruch 7, dadurch gekennzeichnet, daß eine (151) der Rollen des dem zweiten Förderer angehörenden Zwischenpaares (151, 152) auch den Greiforganen (150) angehört.

9. Ausgabevorrichtung nach einem Ansprüche 3 bis 8, dadurch gekennzeichnet, daß der Kartenausgang (126) des Magazins, der Weg im ersten Förderer (131, 132, 141, 142) und der Eintritt/ Austritt der Karte (5) in die Programmiereinheit im wesentlichen fluchten.

10. Ausgabevorrichtung nach Anspruch 9, dadurch gekennzeichnet, daß der durch die dem zweiten Förderer angehörenden zwei Rollenpaare (151, 152, 161, 162) bestimmte Weg gegenüber dem Weg des ersten Förderers geneigt ist und daß eine (131) der beim Übergang angeordneten Rollen beweglich (131A) ist, um das Kippen der Karte ohne Verlust in der Kontinuität des Antriebes zu ermöglichen.

11. Ausgabevorrichtung nach Anspruch 10, dadurch gekennzeichnet, daß der Mittelpunkt der beweglichen Rolle (131) entlang eines Kreisbogens (136) geführt ist, der im wesentlichen konzentrisch zur anderen Rolle des gleichen Paares verläuft.

12. Vorrichtung nach einem der Ansprüche 10 und 11, dadurch gekennzeichnet, daß sie einen Randanzeiger (170) für die Karte aufweist, der an der Seite des ersten Förderers nahe der beweglichen Rolle angeordnet ist.

13. Vorrichtung nach einem der Ansprüche 3 bis 12, dadurch gekennzeichnet, daß sie einen Randanzeiger (171) für die Karte aufweist, der im mittleren Bereich des dem zweiten Förderer zugehörigen Teiles angeordnet ist, sowie daß ein Randanzeiger (172) für die Karte in Höhe des Ausgabefensters angeordnet ist.

14. Vorrichtung nach einem der vorstehenden Ansprüche, dadurch gekennzeichnet, daß das Kartenmagazin (110) mindestens ein, gestapelte Karten aufnehmendes Gehäuse (120) aufweist, wobei die Karten durch eine elastische Rückstellkraft (122) gegen eine Greifstellung zu ihrem Ausgang (126) gedrängt werden.

15. Vorrichtung nach Anspruch 14, dadurch gekennzeichnet, daß mehrere Gehäuse (120—1 bis 120— 8) auf einem Karussell (110) angeordnet sind.

16. Vorrichtung nach einem der Ansprüche 1 bis 13, dadurch gekennzeichnet, daß das Magazin ein Zellenkarussell (300) zur Aufnahme einer Karte pro Zelle aufweist, das im Inneren eines scheibenförmigen Gehäuses (310) drehbar angeordnet und mit Ausnahme eines Platzes einer Zelle verschlossen ist, wobei gleichzeitig Antriebsorgane (320) für das Karussell angeordnet sind.

17. Vorrichtung nach einem der vorstehenden Ansprüche, dadurch gekennzeichnet, daß sie zur Widerprogrammierung einer bereits gebrauchten Karte eingerichtet ist.

**Claims**

1. Microcircuit card vending machine, characterised in that it comprises, in an enclosure (100):
— means (210—224) for control purposes and communicating with the user, enabling his/her right to possess a card to be checked,
— at least one store (230, 232) for unvalidated microcircuit cards,
— gripping means (150—159) adapted to imediately expel a card from the store,
— a first conveyor (131, 132, 141, 142) for bringing the card into a position for co-operation with a programming unit (1) which can validate it, and
— a second conveyor (141, 142, 131, 132, 151, 152, 161, 162) adapted to convey the validated card to a delivery slot (105) extending through the wall of the enclosure.

2. Vending machine according to claim 1, characterised in that the processing unit (1) can also monitor the card validation process in that it comprises ejection means (131, 132, 141, 142, 180) enabling any incorrectly validated card to be stored inside the enclosure.

3. Vending machine according to either of claims 1 and 2, characterised in that the first and second conveyors comprise a common part (131, 132, 141, 142) adapted to move the card into the programming unit, and vice versa.

4. Vending machine according to claim 3, characterised in that the mobile programming unit (1) has a second position in which it no longer co-operates with the first conveyor in the common part, with the ejection then taking place directly from the conveyor into an unvalidated card receptacle (180).

5. Vending machine according to claim 3, characterised in that the gripping means comprise a roller (151) borne by a mobile lever (150) and adapted to co-operate when actuated with the store (120) to expel a card from the latter towards the first conveyor (131, 132).

6. Vending machine according to one of claims 3 to 5, characterised in that the first conveyor comprises at least two pairs of rollers (131, 132, 141, 142) which form the said common part, at least one of these rollers (142) being motor-driven.

7. Vending machine according to one of claims 3 to 6, characterised in that the second conveyor comprises a belt (140) which passes in a closed loop between the rollers (131, 132, 141, 142) of the first conveyor and between the rollers of at least two other pairs (151, 152, 161, 162), the last (161, 162) of which is disposed close to the exit slot (105).

8. Vending machine according to claim 7, characterised in that one of the rollers (151) of the intermediate pair of rollers (151, 152) belonging to the second conveyor also forms part of the gripping means (150).

9. Vending machine according to one of claims 3 to 8, characterised in that the card exit (126) from the store, the path within the first conveyor (131, 132, 141, 142) and the card entrance/exit (5) into/from the programming unit are approximately aligned.

10. Vending machine according to claim 9, characterised in that the path defined by the two pairs of rollers belonging to the second conveyor (151, 152, 161, 162) is inclined towards the path within the first conveyor, and in that one (131) of the rollers located at the point of the transition is mobile (131A) so as to allow the card to tilt without losing the continuity of movement.

11. Vending machine according to claim 10, characterised in that the centre of the said mobile roller (131) follows an arc of a circle (136) which is approximately concentric with the other roller of the same pair.

12. Device according to either of claims 10 and 11, characterised in that it comprises a card edge detector (170) next to the said mobile roller, on the first conveyor side.

13. Device according to one of claims 3 to 12, characterised in that it comprises a card edge detector (171) which is located in the vicinity of the centre of the part belonging to the second conveyor, and a card edge detector (172) at the level of the delivery slot.

14. Device according to one of the preceding claims, characterised in that the card store (110) comprises at least one case (120) accommodating stacked cards which are urged by resilient return means (122) into a gripped position for their exit (126).

15. Device according to claim 14, characterised in that a plurality of cases (120—1 to 120—8) are mounted on a carrousel (110).

16. Device according to one of claims 1 to 13, characterised in that the store comprises an alveolate carrousel (300) which is adapted to accommodate one card per cell and can rotate inside a discoid case (310), which is closed except for at the point of a cell location (301) and also accommodates means (320) for driving the carrousel.

17. Device according to one of the preceding claims, characterised in that it is formed so as also to enable a card which has already been used to be reprogrammed.

FIG.1

EP 0 241 342 B1

FIG.2

EP 0 241 342 B1

FIG. 2A

FIG. 2B

FIG. 2C

# FIG. 3

120-5

110

120-6

120-4

120-7

120-3

120-8

120-2

120-1

151A

## FIG.4

VISU SOLDE A PAYER — 226

VISU INFORMATIONS — 228

CLAVIER USAGER — 224

DISTRIBUTEUR DE CARTES N°1 — 230

DISTRIBUTEUR DE CARTES N°2 — 232

UNITE CENTRALE DE COMMANDE — 212

RECEPTACLE ACCEPTEUR DE BILLETS — 222

PAIEMENT ELECTRONIQUE — 223

FENTE ET TRIEUR DE MONNAIE — 214

SEBILE — 220

RECYCLEUR DE MONNAIE — 216

COFFRE A MONNAIE — 218

100

EP 0 241 342 B1

# FIG. 5

310-1
310-2
300
301

# FIG. 5A

310
320
300
301